Europäisches Patentamt

European Patent Office

Office européen des brevets

(11) Publication number: 0 342 905 A2

# EUROPEAN PATENT APPLICATION

(21) Application number: 89304896.7

(22) Date of filing: 16.05.89

(51) Int. Cl.⁴: G01M 3/16

(30) Priority: 17.05.88 GB 8811653

(43) Date of publication of application:
23.11.89 Bulletin 89/47

(84) Designated Contracting States:
CH DE FR GB IT LI NL SE

(71) Applicant: White, Peter Douglas
3 Faringdon House
Faringdon Oxon SN7 8AE(GB)

(72) Inventor: White, Peter Douglas
3 Faringdon House
Faringdon Oxon SN7 8AE(GB)

(74) Representative: Rock, Olaf Colin
Rock and Company Trelawn
Cassington Oxford OX8 1 DN(GB)

(54) Leak detector.

(57) A leak detector for use particularly in domestic environments with clothes and dish washing machines is made up of a mat for locating beneath the machine likely to leak. The mat (11) comprises a laminar base having a surface of relatively low electrical conductivity on which is provided first and second arrays (12, 15) of conductors of relatively high electrical conductivity, the conductors of the first and second array being juxtaposed with, but spaced apart from, each other so as to leave short and normally non-conducting paths between juxtaposed conductors in the first array (12) and those in the second (15). A first junction (13) communicates with the first array (12) to enable a voltage to be applied to the conductors of the first array (12). A second junction (16) communicates with the second array (15) to enable a voltage to be applied to the conductors of the second array (15). An electrical change-of-state detector (19), including a triggering device (22), is coupled between the first and the second junctions (13, 16) so that in the event of a change of state caused by a conducting path being established between a conductor in the first array and one in the second array, such as by leakage from the machine onto the mat, the change of state detector (19) is caused to operate the triggering device (22).

## LEAK DETECTOR

This invention relates to a leak detector. It is particularly, though not exclusively, intended for use in a domestic environment with water-using devices such as clothing or dish washers. Such devices make use of substantial amounts of water (sometimes hot and containing detergent) and a leak from the device can result in substantial damage and inconvenience.

According to a first aspect of the present invention there is provided a leak detector in the form of:

1 a mat comprising a laminar base having a surface of relatively low electrical conductivity on which is provided

2 first and second arrays of conductors of relatively high electrical conductivity, the conductors of the first and second array juxtaposed with, but spaced apart from , each other so as to leave short and normally non-conducting paths between juxtaposed conductors in the first array and those in the second;

3 a first junction communicating with the first array to enable a voltage to be applied to the conductors of the first array;

4 a second junction communicating with the second array to enable a voltage to be applied to the conductors of the second array; and

5 an electrical change-of-state detector, including a triggering device, coupled between the first and the second junctions such that in the event of a change of state caused by a conducting path being established between a conductor in the first array and one in the second array, such as by a deposition of liquid on the mat, the change of state detector is caused to operate the triggering device.

In a preferred version of the first aspect of the present invention the triggering device is used to drive an alarm generator and/or a means adapted to regulate operation of a device causing the leak.

In a further version of the first aspect of the present invention the arrays are disposed on the mat so that in at least one area a conductor in the first array and one in the second array are disposed with a separation which is less than elsewhere in the mat. Typically a minimum separation is used in locations where the earliest detection of a leak is sought so that a change of state will be triggered by a small amount of leaking liquid.

In yet another version of the first aspect present invention the mat includes inclined surfaces or ducts whereby liquid deposits failing on the mat in one area are biassed to move under gravity towards another area.

According to a second aspect of the present invention there is provided a water storing or utilizing device such as a storage tank or washing machine equipped with a leakage device according to the first aspect or any preferred or other version thereof hereinbefore described.

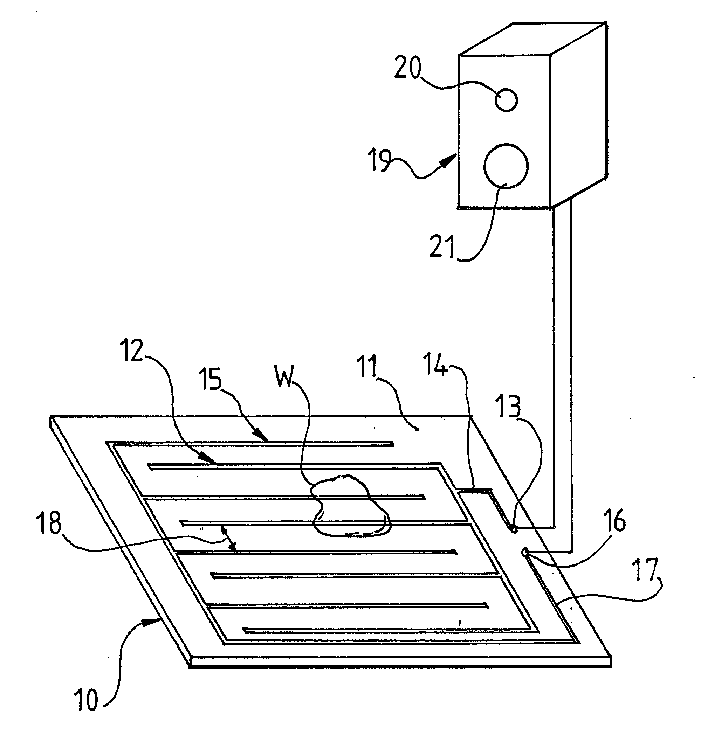

An exemplary embodiment of the invention will now be described with reference to the accompanying drawing which is a perspective view of a leak detector for a domestic washing machine.

The drawing shows a leak detector 10 comprising a flexible mat 11 of plastics material having a relatively high electrical resistance. The mat 11 has deposited upon it a first array 12 of conducting material strips which are coupled to first junction 13 by way of a conductor link 14. The mat also has deposited upon it a second array 15 of conducting material strips which are coupled to second junction 16 by way of a conductor link 17. The strips of the first and second arrays are spaced apart from one another to leave gaps, typically gap 18, substantially greater than the width of the conducting strips themselves. In an alternative embodiment the conducting material is intimately incorporated into the mat, such as by weaving or impregnation, rather than deposited on it.

The junctions 13, 16 are connected to a transistorized change-of-state unit 19 which is adapted in use to maintain a low voltage differential between the two junctions 13, 16 and so between the conductors of the first array 12 and the second array 15. The junctions 13, 16 are coupled to a transistor arrangement 22 housed in the unit 19 such that with a significant change in current flow between the junctions the transistor arrangement 22 causes an alarm light 20 to be illuminated and a sound signal to be generated from loudspeaker 21. The unit 19 operates at very low voltages to ensure that any currents generated will offer no safety hazards.

The leak detector 10 is positioned beneath a washing machine so as to extend outwardly slightly beyond the plan area of the machine in its normal working position. If necessary the mat 11, and the conductors, can be cut to provide a suitable shape for the installation involved. The first and second arrays are disposed to enable substantial peripheral areas of the mat and conductors to be removed without adversely affecting operation of the detector.

In the event of a significant leakage of water from the machine onto the detector 10, for example giving the deposit W, at least one conductor in each of the first and second arrays will be linked to provide a relatively low resistance path between the arrays. As a consequence the unit 19 will detect a current change-of-state which will be sufficient to enable arrangement 22 to trigger alarm light 20 and generate sounds from loudspeaker 21. The user of the washing machine can then evaluate the significance of the leak and take appropriate action. Once the source of the leak has been established and the necessary repairs completed the deposit W is wiped off and the unit 19 reset whereupon the detector 10 is ready for further use.

While in the described embodiment the unit 19 serves to provide only a warning function it is envisaged that a detector could be provided directed to positively respond to a detected leak. Thus further operation of a washing cycle by the washing machine would be stopped and water supply to the machine terminated. In addition a machine cycle can be initiated whereby the system is pumped dry.

The detector described shows a mat with a relatively uniformly distributed array. If necessary a selective or a non-uniform pattern could be provided for situations where leakages in particular areas were more significant than in others and a fast response to even a small leak was required. The separation of the conductors can also be varied.

In a further embodiment the detector could incorporate a relatively thick mat or bed with sloping drainage channels or areas so that a leakage falling on one part of the mat is channelled to another part where the or a conductor array is located.

The embodiment of the invention is applicable to any machine or storage from which leakage could occur. This would include domestic, service or manufacturing applications where a leak could lead to danger, inconvenience or to costly repairs. Domestic applications would include dish washers and water storage or using devices. Service applications would include vending and dispensing machines. Manufacturing applications would include storage in remote locations of liquids liable to cause damage typically because they are flammable or corrosive or because of their bulk or location.

## Claims

1 A leak detector characterised by:

1 a mat (11) comprising a laminar base having a surface of relatively low electrical conductivity on which is provided

2 first and second arrays (12, 15) of conductors of relatively high electrical conductivity, the conductors of the first and second array being juxtaposed with, but spaced apart from, each other so as to leave short and normally non-conducting paths between juxtaposed conductors in the first array (12) and those in the second (15);

3 a first junction (13) communicating with the first array (12) to enable a voltage to be applied to the conductors of the first array (12);

4 a second junction (16) communicating with the second array (15) to enable a voltage to be applied to the conductors of the second array (15) and

5 an electrical change-of-state detector (19), including a triggering device (22), coupled between the first and the second junctions (13, 16) such that in the event of a change of state caused by a conducting path being established between a conductor in the first array and one in the second array, such as by a deposition of liquid on the mat, the change of state detector (19) is caused to operate the triggering device (22).

2 A leak detector as claimed in Claim 1 characterised by an alarm generator (20, 21) coupled to the triggering device (22) to enable the device to trigger the generator (20, 21) and/or to regulate operation of a device causing the leak.

3 A leak detector as claimed in Claim 2 or Claim 3 characterised in that the arrays (12, 15) are disposed on the mat (11) so that in at least one area of the mat a conductor in the first array (12) and one in the second array (15) are disposed with a separation which is less than elsewhere on the mat (11).

4 A leak detector as claimed in any preceding claim characterised in that the mat (11) includes inclined surfaces or ducts whereby liquid deposits falling on the mat (11) in one area are biassed to move under gravity towards another area.

5 A water storing or utilizing device such as a storage tank or washing machine characterised by the provision of a leak detector according to any preceding claim.